# EUROPÄISCHE PATENTSCHRIFT

(11) **EP 2 880 372 B1**
(45) Veröffentlichungstag und Bekanntmachung des Hinweises auf die Patenterteilung: **20.02.2019**
(21) Anmeldenummer: 13744546.6
(22) Anmeldetag: 01.08.2013
(51) Int. Cl.: F24S 30/425, F24S 23/74, F24S 25/00, F24S 25/30

(54) **TRAGSTRUKTUR FÜR SOLARKOLLEKTOREN UND VERFAHREN ZU DEREN HERSTELLUNG**
BEARING STRUCTURE FOR SOLAR COLLECTORS AND METHOD FOR ITS PRODUCTION
STRUCTURE DE SUPPORT POUR CAPTEURS SOLAIRES ET PROCEDE A LEUR MANUFACTURE

(30) Priorität: 02.08.2012 DE 102012213626
(43) Veröffentlichungstag der Anmeldung: 10.06.2015
(73) Patentinhaber: Sunoyster Systems GmbH, 25469 Halstenbek (DE)
(72) Erfinder: CORINO, Carsten, 25469 Halstenbek (DE)
(74) Vertreter: Thomas, Götz
(86) Internationale Anmeldenummer: PCT/EP2013/066157
(87) Internationale Veröffentlichungsnummer: WO 2014/020098

(56) Entgegenhaltungen:
- EP-A1- 0 000 913
- WO-A1-2004/114419
- DE-A1-102009 033 490
- DE-A1-102009 034 421
- DE-U1-202008 014 320
- DE-U1-202008 016 704
- US-A1- 2011 094 502

## Beschreibung

Die Erfindung betrifft eine Tragstruktur für den Reflektor eines Solarkollektors sowie Herstellungsverfahren für die erfindungsgemäße Tragstruktur.

Im Stand der Technik ist eine Vielzahl von Bauarten für Solarkollektoren bekannt. Eine dieser Bauarten umfasst einen rinnenparabolisch geformten Reflektor - auch Parabolrinne genannt - in dessen Brennlinie ein Absorber angeordnet ist. Durch entsprechende Ausrichtung des Solarkollektors wird die auf den Reflektor auftreffende Sonnenstrahlung in der Brennlinie fokussiert. Der dort angeordnete Empfänger kann die Sonnenstrahlung dann in nutzbare Energie, beispielsweise Wärme oder Elektrizität, umwandeln.

Die rinnenparabolisch geformten Reflektoren aus dem Stand der Technik bestehen herkömmlicherweise aus einem speziell ausgeformten Glasspiegel, der auf einer Metallstruktur befestigt und durch diese strukturell verstärkt wird. Die Metallstruktur ist zur Nachführung des Glasspiegels ausgebildet, d.h. der Glasspiegel ist um mindestens eine Achse schwenkbar gelagert, so dass er dem Stand der Sonne entsprechend ausgerichtet werden kann.

Aus der DE 10 2010 006 532 A1 ist ein Solarkollektor bekannt, bei dem der Reflektor als Reflexionsschicht auf einer Plattenanordnung ausgebildet ist. Die Plattenanordnung ist an einer Struktur aus Rippenelementen befestigt, welche durch ein Versteifungselement miteinander verbunden sind. Unter anderem die Plattenanordnung kann in Sandwichbauweise hergestellt sein, bei der eine Kernstruktur, bspw. eine Wabenstruktur, auf zwei gegenüberliegenden Seiten mit jeweils einer Deckschicht verklebt ist. Eine entsprechende Plattenanordnung in Sandwichbauweise ist sehr kostenintensiv und aufwendig in der Herstellung.

Nachteilig an diesem Stand der Technik ist, dass die Herstellungskosten sehr hoch sind. Insbesondere bei Metallstrukturen ist darüber hinaus auch das Gewicht sehr hoch.

Eine Tragstruktur gemäss der Präambel des Anspruchs 1 offenbart die Patentschrift WO 2004/114419A.

Aufgabe der vorliegenden Erfindung ist es, eine Tragstruktur für Solarkollektoren zu schaffen, welche die Nachteile des Standes der Technik nicht mehr oder nur noch in geringerem Maße aufweist.

Gelöst wird diese Aufgabe durch eine Tragstruktur gemäß dem Hauptanspruch, sowie durch die Herstellungsverfahren gemäß den Ansprüchen 16 und 17. Vorteilhafte Weiterbildungen ergeben sich aus den abhängigen Ansprüchen.

Demnach betrifft die Erfindung eine Tragstruktur für den Reflektor eines Solarkollektors mit einem, in Längsrichtung rinnenparabolisch geformten Reflektortragelement, wobei das Reflektortragelement aus Kunststoff ist und den Aufbau einer Stegplatte hat, wobei sich die Kammern der Stegplatte in Längsrichtung des Reflektortragelements erstrecken.

Des Weiteren betrifft die Erfindung ein Verfahren zur Herstellung eines Reflektortragelementes, wobei das Reflektortragelement den Aufbau einer Stegplatte aufweist und entweder in rinnenparabolischer Form extrudiert oder durch die Warmumformung ausgehend von einer ebenen Stegplatte in eine rinnenparabolische Form erzeugt wird.

Indem das Reflektortragelement der Tragstruktur als Stegplatte aus Kunststoff ausgeführt ist, wird bei äußerst geringem Materialeinsatz die für die Verwendung als Tragstruktur für den Reflektor eines Solarkollektors nötige Steifigkeit erreicht. Stegplatten haben in ihrer Grundstruktur zwei voneinander in geringem Abstand angeordnete dünne Platten, die jeweils durch mehrere Stege miteinander verbunden sind, womit eine entsprechende Stegplatte eine Lage von Kammern aufweist. Aufgrund dieser Struktur sind Stegplatten weitgehend hohl, was sich positiv auf ihr Gewicht auswirkt, weisen jedoch eine große Steifigkeit auf, da sich die durch die Stege entstehende Tiefe der Platten mit der dritten Potenz in der Steifigkeit auswirkt. Die Stege können orthogonal zu den dünnen Platten (auch Gurten genannt) der Stegplatte verlaufen. Sie können aber auch in einem von 90° abweichenden Winkel zu diesen angeordnet sein. Beispielsweise kann der Winkel zwischen dünner Platte und Steg ca. 45° oder ca. 60° betragen. Durch eine entsprechende nicht-orthogonale Anordnung wenigstens eines Teils der Stege kann die Torsionssteifigkeit der Stegplatte erhöht werden.

Um die Steifigkeit von Stegplatten weiter zu erhöhen, können zusätzliche Lagen von Kammern vorgesehen sein. Dazu werden eine oder mehrere zusätzliche Platten vorgesehen, die jeweils über mehrere Stege mit den benachbarten Platten verbunden sind, so dass sich eine oder mehrere zusätzliche Lagen von Kammern parallel zu der vorbeschriebenen Lage von Kammern ergeben. Erfindungsgemäß kann die Stegplatte eine oder mehrere Lagen von Kammern aufweisen.

Entsprechende Stegplatten können kostengünstig in einem Extrudierverfahren hergestellt werden. Dabei ist erfindungsgemäß vorgesehen, dass die Stegplatten direkt in rinnenparabolischer Form extrudiert werden. Alternativ ist es möglich, eine ebene Stegplatte - die beispielsweise ebenfalls in einem Extrudierverfahren hergestellt wurde - in einem Warmumformungsprozess in eine rinnenparabolische Form zu bringen.

Die Erfindung hat entgegen von Vorurteilen im Stand der Technik erkannt, dass entsprechend ausgestaltete Reflektortragelemente bzw. Tragstrukturen trotz der Kosten- und ggf. Gewichtseinsparungen eine mit Metall- oder Sandwichstrukturen vergleichbare Haltbarkeit von typischerweise mindestens 20 Jahren aufweisen können.

Um zu verhindern, dass Wasser oder sonstige Substanzen in die Kammern der Stegplatte eindringen können, sind vorzugsweise die Enden der Stegplatte verschlossen. Um Spannungen in der Stegplatte aufgrund von Wärmeausdehnung zu vermeiden, ist weiter bevorzugt, wenn die Enden der Stegplatte mit dem gleichen Material verschlossen sind, aus dem auch die Stegplatte besteht. Insbesondere können die Enden der Stegplatte mit Abdeckplatten aus demselben Material, aus dem auch die Stegplatte besteht, verschweißt werden. Sind die Enden der Stegplatte verschlossen, sind an der Stegplatte bevorzugt Druckausgleichsöffnungen vorgesehen, sodass der Druck in den Kammern der Stegplatte grundsätzlich dem Umgebungsdruck entspricht.

Um die Stegplatte weiter zu versteifen, wird gemäss der Erfindung auf der vom Reflektor abgewandten Seite des Reflektortragelementes wenigstens eine mit der Stegplatte verbundene Versteifungsrippe vorgesehen sein. Die Versteifungsrippe kann sich dabei im Wesentlichen über die gesamte Höhe des Reflektortragelementes erstrecken. Das bedeutet, dass sich die Tragstruktur zumindest zwischen denen in Längsrichtung gesehenen Randbereichen der Stegplatte erstreckt, wobei eine zusätzliche Versteifung in den Randbereichen aufgrund der dort im Vergleich zu den übrigen Bereichen geringeren Belastung nicht zwingend erforderlich ist. Die wenigstens eine Versteifungsrippe oder wenigstens ein Teil der Versteifungsrippen kann zur Anbindung der Tragstruktur an eine Vorrichtung zur Nachführung des Solarkollektors ausgebildet sein.

Es ist bevorzugt, wenn die Versteifungsrippe aus einem Material gefertigt ist, welches einen mit dem Material der Stegplatte vergleichbaren Wärmeausdehnungskoeffizienten aufweist. Dadurch wird sichergestellt, dass möglichst wenig Spannung in der Stegplatte und/oder der wenigstens einen Versteifungsrippe auftreten. Es ist besonders bevorzugt, wenn die Versteifungsrippe aus demselben Material wie die Stegplatte ist. Es ist aber auch möglich, dass die Versteifungsrippe aus Metall, vorzugsweise aus Stahl oder Aluminium, ist. Ist die Versteifungsrippe aus Metall, kann sie bevorzugt in einem Stanz- oder Gussverfahren hergestellt sein. Insbesondere wenn die wenigstens eine Versteifungsrippe aus Kunststoff ist, wird diese vorzugsweise im Spritzgussverfahren hergestellt. Alternativ ist es möglich, die Versteifungsrippe aus Kunststoff in einem Twin-Sheet-Verfahren herzustellen, bei dem wenigstens zwei thermoplastische Platten erhitzt und durch Vakuumformung gleichzeitig zu einem Hohlkörper verschweißt werden.

Die wenigstens eine Versteifungsrippe kann mit stiftartigen Fixierungselementen, beispielsweise Schrauben, Bolzen, Nieten, usw., an der Stegplatte befestigt werden. Vorzugsweise sind die stiftartigen Fixierungselemente als Presslaschen-Blindnietmuttern ausgeführt. Die Stegplatte kann dabei in den Bereichen, in denen die stiftartigen Fixierungselemente angreifen, verstärkt sein. Alternativ oder zusätzlich ist es möglich, dass an wenigstens einem Ende einer Versteifungsrippe ein Halterungselement vorgesehen ist, welches zum Umgreifen der Stegplatte an ihren unteren und oberen Rändern ausgebildet ist. Weist eine Versteifungsrippe entsprechende Halterungselemente an beiden ihrer Enden auf, kann die Stegplatte von der Versteifungsrippe eingefasst werden. Ferner kann die Rippe die Stegplatte auch an ihren Seiten umfassen. Es ist auch möglich, dass die wenigstens eine Versteifungsrippe stoffschlüssig mit der Stegplatte, beispielsweise durch Verschweißen oder Verkleben, verbunden ist. Die wenigstens eine Versteifungsrippe kann bereits bei der Herstellung der Tragstruktur, aber zum Beispiel auch erst am Aufstellungsort des Solarkollektors mit der Stegplatte verbunden werden

Erfindungsgemäss ist auf der Rückseite der Stegplatte wenigstens ein in Längsrichtung verlaufender Vorsprung vorgesehen sind. Ein entsprechender Vorsprung kann mit der Stegplatte einstückig ausgebildet und, sofern die Stegplatte in einem Extrudierverfahren hergestellt wird, vorzugsweise zusammen mit dieser extrudiert sein. Die Versteifungsrippen weisen dann zu dem Vorsprung oder den Vorsprüngen passende Aussparungen auf.

Der oder die Vorsprünge weisen weiter für einen Formschluss mit den Versteifungsrippen geeignete Formgebung auf, vorzugsweise eine Schwalbenschwanz- oder Doppelfingerform. Ist mehr als ein Vorsprung vorgesehen, kann aufgrund der Krümmung der Rückseite der Stegplatte auch ein Rechteckprofil der einzelnen Vorsprünge eine Formschlussverbindung mit einer Versteifungsrippe gewährleisten. Die Versteifungsrippe ist dann mit passenden Aussparungen ausgestattet und kann in Längsrichtung auf die Vorsprünge an der Stegplatte aufgeschoben werden. Falls eine Fixierung der Versteifungsrippe in Längsrichtung erforderlich ist, kann die Versteifungsrippe insbesondere im Bereich der Vorsprünge mit der Stegplatte verschraubt, vernietet, verklebt oder verschweißt werden.

Die Vorrichtung zur Nachführung des Solarkollektors, auf der die Tragstruktur zu befestigen ist, kann einen anderen Wärmeausdehnungskoeffizienten als die Stegplatte aufweisen. Um insbesondere in Längsrichtung Spannungen und/oder Verformungen der Nachführvorrichtung und/oder der Stegplatte zu vermeiden, kann vorgesehen sein, den Längenausdehnungskoeffizienten der Stegplatte (d.h. den Wärmeausdehnungskoeffizienten in Längsrichtung der Stegplatte) durch Füll- und/oder Verstärkungsstoffe an den Längenausdehnungskoeffizienten der Nachführvorrichtung anzupassen. Durch das Hinzufügen von Füllstoffen (zum Beispiel flüssigkristallines Polymer oder Glas) bzw. Verstärkungsstoffen (zum Beispiel Glasfaser oder Karbonfaser) ist es möglich, die Eigenschaften des Kunststoffes, aus dem die Stegplatte gefertigt ist, so zu beeinflussen, dass diese den gleichen oder einen sehr ähnlichen Längenausdehnungskoeffizienten wie die Nachführvorrichtung hat. Es ist besonders bevorzugt, wenn Glasfasern als Verstärkungsstoff verwendet werden, insbesondere Langglasfasern mit einer Länge von über 8 mm. Durch entsprechende Langglasfasern lässt sich die Längenausdehnung der Stegplatte besonders gut reduzieren. Es ist auch möglich, den Anteil an Füll- und/oder Verstärkungsstoffen über die Stegplatte zu variieren, um so die Herstellung im Extrusionsverfahren zu vereinfachen und/oder die Stegplatte in besonders beanspruchten Bereichen gezielt zu verstärken. Die Variation der Füll- oder Verstärkungsstoffe kann bei einer Extrusion insbesondere im Wege der Ko-Extrusion erfolgen. Falls erforderlich kann der Längenausdehnungskoeffizient der Stegplatte alternativ oder zusätzlich auch an den Längenausdehnungskoeffizienten des Reflektors entsprechend angepasst werden.

Alternativ oder zusätzlich ist es möglich, dass wenigstens jeweils eine Versteifungsrippe mit der Stegplatte über eine feste Aufnahme und über eine in Längsrichtung der Stegplatte verschiebbare Aufnahme verbunden ist. Ist die Vorrichtung zur Nachführung des Solarkollektors in Längsrichtung nur an einer oder wenigen Stellen bspw. über eine fest mit der Stegplatte verbundenen Versteifungsrippe verbunden, und sind die übrigen Versteifungsrippen, mit denen die Nachführvorrichtung verbunden ist, gegenüber der Stegplatte in Längsrichtung gleitend gelagert, so ist die Verbindung zwischen Nachführungsvorrichtung und Stegplatte in dieser Richtung statisch bestimmt. Spannungen und Verformungen in der Längsrichtung, insbesondere aufgrund unterschiedlicher Längenausdehnungskoeffizienten, können so vermieden werden.

Alternativ oder zusätzlich ist es möglich, zwischen dem Reflektor und der Tragstruktur eine flexible Materialschicht, beispielsweise aus Schaumstoff, vorzusehen. Ein entsprechender Solarkollektor umfasst also einen Reflektor und eine Tragstruktur, wobei zwischen dem Reflektor und der Tragstruktur eine flexible Materialschicht vorgesehen ist. Über die flexible Materialschicht können unterschiedliche Wärmeausdehnungskoeffizienten des Reflektors und der Tragstruktur kompensiert werden. Die flexible Materialschicht kann, sofern die Stegplatte in einem Extrudierverfahren hergestellt wird, auch mit der Stegplatte ko-extrudiert sein, wobei die Materialschicht vorzugsweise aus Kunststoff, weiter vorzugsweise aus einem thermoplastischen Elastomer ist. Neben dem Ausgleich von unterschiedlichen Wärmeausdehnungskoeffizienten können dadurch im Bereich, in welchem der Reflektor angebracht werden soll, die Oberfläche der Tragstruktur geglättet und/oder deren Klebeeigenschaften verbessert werden.

Alternativ kann der Reflektor auch direkt auf die Tragstruktur aufgebracht werden. Der Reflektor ist dabei kein separates Bauteil, sondern direkt auf der Tragstruktur aufgetragen. Dazu kann beispielsweise eine dünne Schicht eines stark reflektierenden Materials (zum Beispiel Chrom) direkt auf dem Reflektortragelement bzw. der Stegplatte angebracht werden. Dies kann insbesondere durch Aufdampfen erfolgen, womit eine sehr gute Verbindung zwischen Reflektor und Tragstruktur erreicht wird. Besonders bevorzugt ist es, wenn das Reflektortrageelement bzw. die Stegplatte im Bereich des Reflektors verchromt, vorzugsweise galvanisch verchromt ist. Auf der Schicht des stark reflektierenden Materials können gegebenenfalls eine oder mehrere transparente Schichten, beispielsweise aus hochtransparentem Lack, als Witterungsschutz aufgetragen sein.

Es ist bevorzugt, wenn die Stegplatte quer zur Längsrichtung aus mehreren, übereinander liegenden Segmenten gefertigt ist. Dadurch können große Reflektortragelemente aus mehreren kostengünstigen Stegplatten zusammengesetzt werden. Zwischen den einzelnen Segmenten ist vorzugsweise eine Nut-Feder-Verbindung vorgesehen. Dabei ist die Nut-Feder-Verbindung vorzugsweise so orientiert, dass ein Eindringen von Wasser vermieden wird. Dazu liegt die Nut vorzugsweise über der von unten eingreifenden Feder.

Die Stegplatte und/oder die wenigstens eine Versteifungsrippe können aus Polycarbonat, Acrylnitril-Butadien-Styrol-Copolymerisat, Polyethylenterephthalat, Polyoxymethylen, Polypropylen, Polyethylen, Polystyrol, Polyvinylchlorid oder Mischungen dieser Materialien hergestellt sein. Es ist besonders bevorzugt, wenn es sich bei den verwendeten Materialien um Recyclingmaterialien handelt. Entsprechende Recyclingmaterialien enthalten oftmals Ruß, welches die Brandschutzeigenschaften des Materials verbessern können. Alternativ oder zusätzlich kann das verwendete Material mit flammenhemmenden Mitteln versetzt sein.

Um die Haltbarkeit der Stegplatte und/oder der wenigstens einen Versteifungsrippe zu erhöhen, kann vorgesehen sein, dass die Tragstruktur wenigstens auf der vom Reflektor abgewandten Seite mit einem UV-Schutz versehen ist. Sofern die Tragstruktur oder zumindest Teile der Tragstruktur im Extrudierverfahren hergestellt sind, kann der UV-Schutz als zusätzliche Schicht ko-extrudiert werden. Eine entsprechende zusätzliche Schicht kann alternativ oder zusätzlich auch das Abrutschen von Schnee oder Schmutz fördern.

Zur Erläuterung des erfindungsgemäßen Herstellungsverfahrens eines Reflektortragelementes wird auf die vorstehenden Ausführungen verwiesen.

Die Erfindung wird nun anhand von Ausführungsbeispielen unter Bezugnahme auf die beigefügten Zeichnungen beispielhaft beschrieben. Es zeigen:
Figur 1: ein erstes Ausführungsbeispiel einer nicht vollständig mäßen Tragstruktur für den Reflektor eines Solarkollektors;
Figur 2: eine Detailansicht der Tragstruktur aus Figur 1;
Figur 3: einen Solarkollektor mit einer Tragstruktur gemäß Figuren 1 und 2;
Figur 4: ein zweites Ausführungsbeispiel einer nicht vollständig erfindungsgemäßen Tragstruktur für den Reflektor eines Solarkollektors;
Figur 5: ein drittes Ausführungsbeispiel einer nicht vollständig erfindungsgemäßen Tragstruktur für den Reflektor eines Solarkollektors;
Figur 6: die Tragstruktur aus Figur 5 mit einem darauf angebrachten Reflektor;
Figur 7: ein Ausführungsbeispiel einer erfindungsgemäßen Tragstruktur für den Reflektor eines Solarkollektors; und
Figur 8: ein weiteres Ausführungsbeispiel einer erfindungsgemäßen Tragstruktur für den Reflektor eines Solarkollektors.

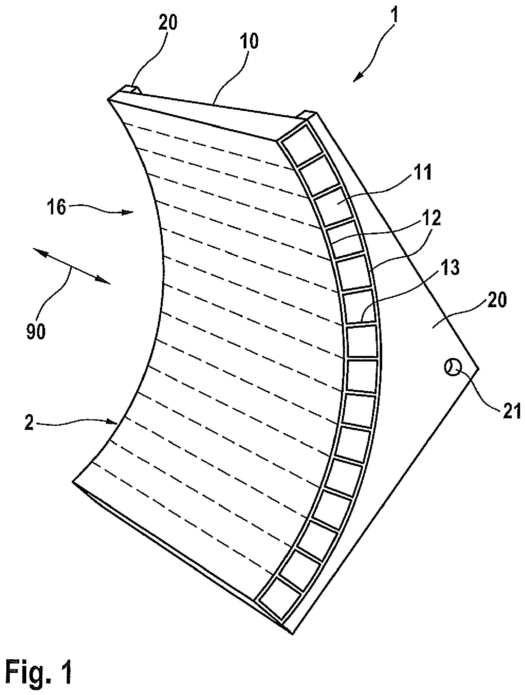

In Figur 1 ist ein erstes Ausführungsbeispiel einer nicht vollständig dungsgemäßen Tragstruktur 1 dargestellt. Die Tragstruktur 1 umfasst ein in Längsrichtung (angedeutet durch Pfeil 90) rinnenparabolisch geformtes Reflektortragelement 2. Das Reflektortragelement 2 ist aus Kunststoff gefertigt und weist den Aufbau einer Stegplatte 10 mit einer einzelnen Lage Kammer 11 auf. Das Reflektortragelement 2 umfasst also zwei voneinander in geringem Abstand angeordnete dünne Platten 12, die durch eine Vielzahl an Stegen 13 miteinander verbunden sind. Durch die Stege 13 werden Kammern 11 gebildet, die sich in Längsrichtung 90 des Reflektortrageelements 2 erstrecken. Das Reflektortragelement 2 weist durch diesen Aufbau eine hohe Steifigkeit bei geringem Gewicht auf.

Auf der konvexen Seite 16 des Reflektortragelementes 2 bzw. der Stegplatte 10 sind Versteifungsrippen 20 vorgesehen. Mit diesen Versteifungsrippen 20 kann die Steifigkeit des Reflektortragelementes 2 weiter erhöht werden. Die Versteifungsrippen 20 erstrecken sich dabei über die vollständige Höhe des Reflektortragelementes 2 und weisen Anschlussmöglichkeiten 21 auf, um die Tragstruktur 1 mit einer Vorrichtung zur Nachführung des Solarkollektors zu verbinden. Im dargestellten Ausführungsbeispiel sind die Versteifungsrippen 20 im Spritzgussverfahren hergestellt. Sie können aber auch im Twin-Sheet-Verfahren hergestellt sein.

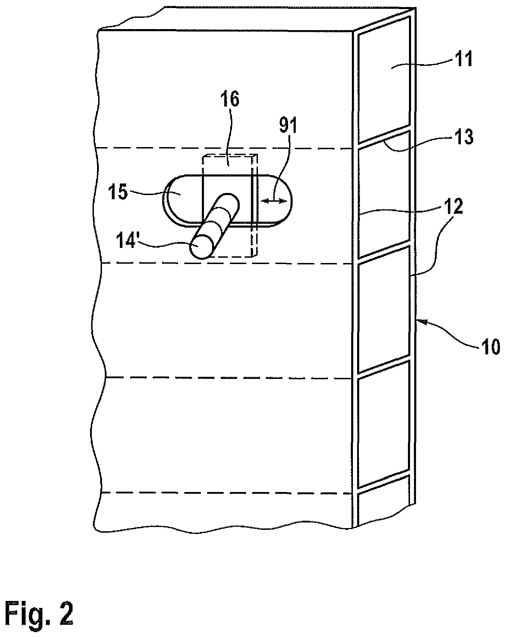

An der Stegplatte sind Bolzen (in Figur 1 nicht dargestellt) als stiftartige Fixierungselemente für Versteifungsrippen 20 vorgesehen. Dabei sind die Bolzen für die eine Versteifungsrippe fest, während sich die Bolzen 14' (vergleiche Figur 2) für die andere Versteifungsrippe in Längsrichtung 90 verschieben lassen. Ist eine Vorrichtung zur Nachführung des Solarkollektors 3 an den Versteifungsrippen 20 befestigt, so können durch die Verschiebbarkeit der Bolzen 14' und damit der einen Versteifungsrippe 20 unterschiedliche Wärmeausdehnungen der Nachführungsvorrichtung und des Reflektortragelementes 2 kompensiert werden, ohne dass es zu Spannungen in der Nachführungsvorrichtung und/oder dem Reflektortragelement 2 in Längsrichtung 90 kommt.

Das Reflektortragelement 10 aus Figur 1 ist durch Warmumformung einer ebenen Stegplatte 10 entstanden. In Figur 2 ist eine Detailansicht des Reflektortragelementes 10 vor der Warmumformung gezeigt.

Um die Verschiebbarkeit der Bolzen 14' sicherzustellen, ist im Bereich einer Kammer 11 eine dünne Platte 12 mit einem Langloch 15 versehen. In diesem Langloch 15 kann ein Gleiter 16, der die dünne Platte 12 hintergreift und an dem der Bolzen 14' befestigt ist, in Richtung 91, welche parallel zur Längsrichtung 90 liegt, verschoben werden. Der Gleiter 16 und/oder der Bolzen 14' können aus Kunststoff oder Metall sein.

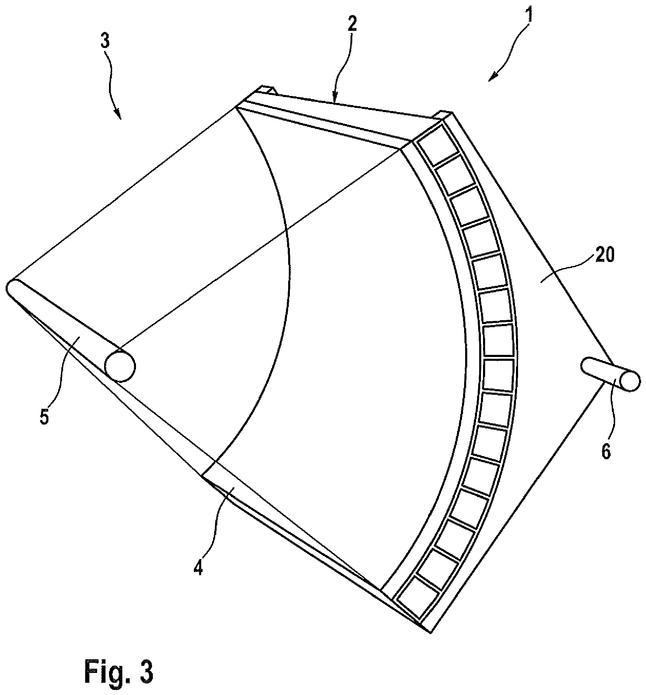

In Figur 3 ist ein Solarkollektor 3 mit einer Tragstruktur 1 gemäß Figuren 1 und 2 dargestellt. Auf dem Reflektortragelement 2 ist ein Reflektor 4 angeordnet. In der Brennlinie des rinnenparabolischen Reflektors 4 ist ein Absorber 5 angeordnet, mit dem die durch den Reflektor 4 reflektierte Sonnenstrahlung in nutzbare Energie, beispielsweise Wärme, umgewandelt werden kann. Die Versteifungsrippen 20 des Reflektortragelementes 2 sind mit einer Achse 6 verbunden, um die der gesamte Solarkollektor 3 nachgeführt werden kann.

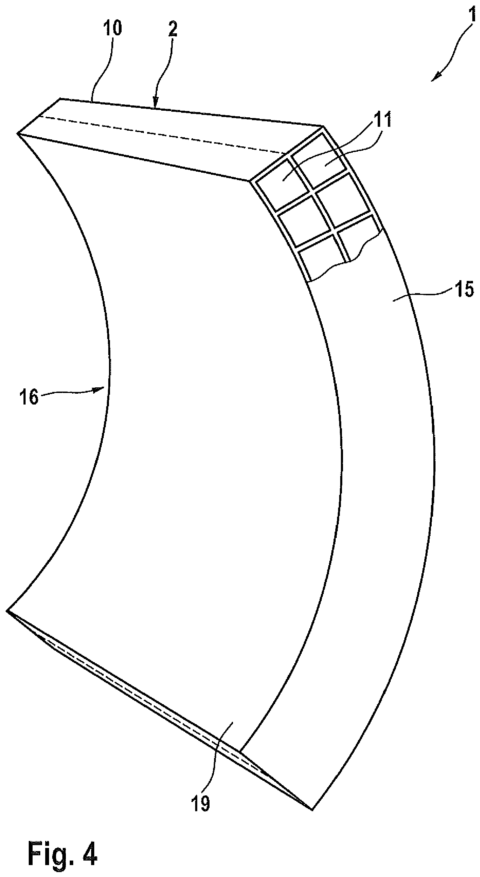

In Figur 4 ist eine zweite Ausführungsform einer nicht vollständig erfindungsgemäßen Tragstruktur 1 gezeigt. Die Tragstruktur 1 umfasst ebenfalls eine Stegplatte 10 aus Kunststoff, wobei diese Stegplatte 10 zwei Lagen Kammern 11 aufweist. Die Stegplatte 10 ist direkt in rinnenparabolischer Form extrudiert.

An den Stirnseiten der Stegplatte 10 ist jeweils eine Abdeckplatte 15 vorgesehen, welche aus dem gleichen Material wie die Stegplatte 10 und mit dieser verschweißt ist. Durch die Abdeckplatte 15 kann sichergestellt werden, dass kein Wasser in die Kammern 11 eindringt.

Anstelle einer Verbindungsmöglichkeit für einen Reflektor ist bei dem Reflektortragelement 10 in Figur 4 die konkav gewölbte Fläche 16 mit einem hoch reflektierenden Material, nämlich Chrom, sowie transparenten Lackschichten versehen. Es ist daher kein gesonderter Reflektor bei dem Reflektortragelement 10 erforderlich.

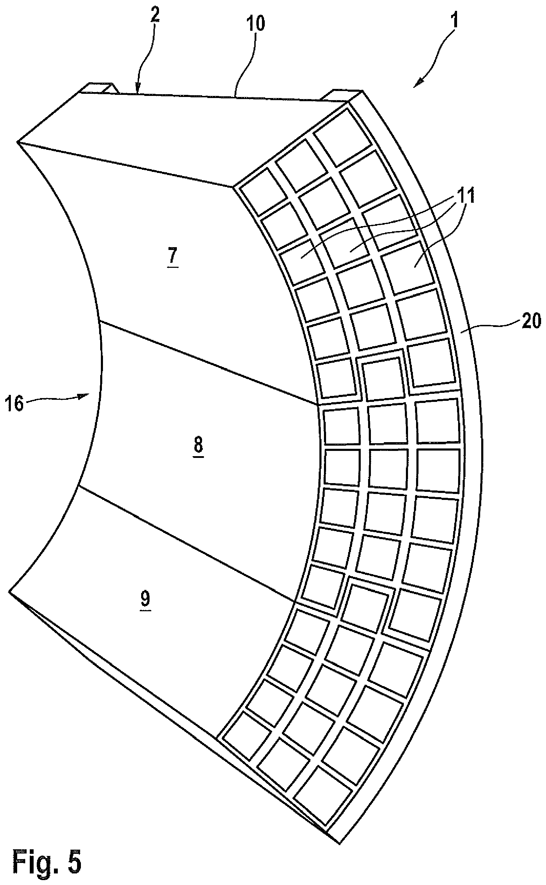

Beim dritten nicht vollständig erfindungsgemässen Ausführungsbeispiel gemäß Figur 5 ist das Reflektortragelement 2 der Tragstruktur 1 aus drei Segmenten 7, 8, 9 zusammengesetzt. Die einzelnen Segmente 7, 8, 9 sind jeweils Stegplatten 10 mit drei Lagen Kammern 11. Beim obersten Segment 7 ist an der Unterseite entsprechend einer Kammer 11 eine Nut vorgesehen, in die eine als Kammer 11 ausgebildete Feder an der Oberseite des mittleren Segments 8 eingreift. Eine vergleichbare Nut-Feder-Verbindung ist auch zwischen dem mittleren Segment 8 (Nut) und dem unteren Segment 9 (Feder) vorgesehen. Indem die Federn grundsätzlich von unten in die Nuten eingreifen, kann verhindert werden, dass sich Wasser in den Nut-Feder-Verbindungen ansammelt. Die einzelnen Segmente 7, 8, 9 sind mit Versteifungsrippen 20 aus Metall durch Verkleben verbunden.

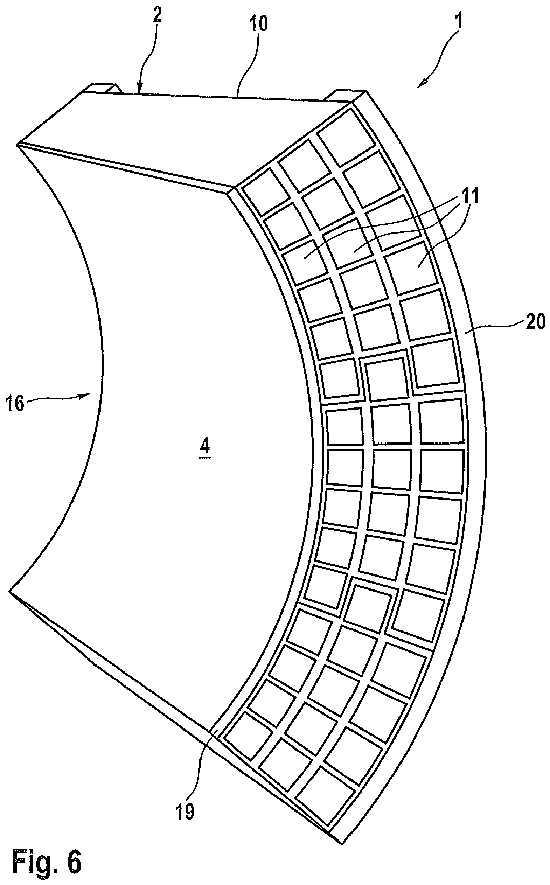

Zur Anbringung eines Reflektors an der Tragstruktur 1 gemäß Figur 5 ist, wie in Figur 6 dargestellt, vorgesehen, dass zunächst eine flexible Schicht 19 aus Schaumstoff auf die konkave Fläche 16 des Reflektortragelementes 2 aufgeklebt wird, auf welche dann wiederum der Reflektor 4 aufgeklebt wird. Alternativ zu einer Schicht 19 aus Schaumstoff kann diese Schicht auch aus thermoplastischem Elastomer sein, das mit der Stegplatte 10 ko-extrudiert ist.

Die Ausführungsbeispiele aus den Figuren 1-6 umfassen Elemente aus Kunststoff. Um den Kunststoff vor Beschädigungen durch UV-Strahlung zu schützen, sind die entsprechenden Elemente mit einem UV-Schutz versehen. Der UV-Schutz kann als zusätzliche Schicht mit der Stegplatte ko-extrudiert sein.

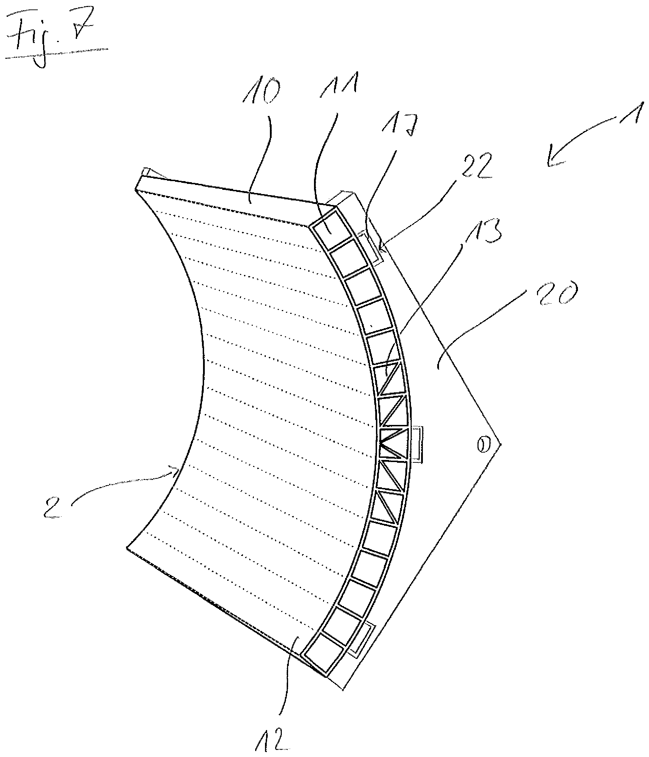

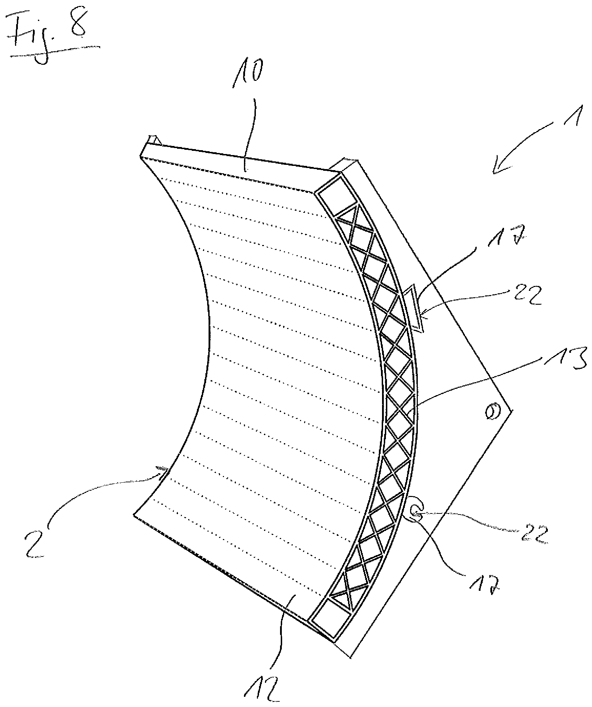

In Figuren 7 und 8 sind Ausführungsbeispiele einer erfindungsgemäßen Tragstruktur 1 dargestellt. Die dort gezeigten Ausführungsbeispiele gleichen in weiten Teilen denjenigen aus Figuren 1 bis 6, weshalb auf die obigen Erläuterungen verwiesen wird. Im folgenden wird lediglich auf die Besonderheiten und Unterschiede der Ausführungsbeispiele aus Figuren 7 und 8 gegenüber den aus Figuren 1 bis 6 eingegangen.

Bei der Stegplatte 10 des Ausführungsbeispiels gemäß Figur 7 sind neben orthogonal zu den dünnen Platten 12 angeordneten Stegen 13, wie diese auch bei den Ausführungsbeispielen aus Figuren 1 bis 5 zu finden sind, zusätzliche Stege 13 vorgesehen, die in einem Winkel zu den dünnen Platten 12 angeordnet sind. Im dargestellten Ausführungsbeispiel sind einzelne Stege vorgesehen, bei denen der Winkel zwischen dünner Platte 12 und Steg 13 entweder 45° oder 60° beträgt. Durch die zusätzlichen Stege 13 kann die Steifigkeit der Stegplatte erhöht werden.
Auf der Rückseite der Stegplatte 12 sind drei in Längsrichtung verlaufende Vorsprünge 17 mit einem Rechteckprofil ko-extrudiert, d. h. die Vorsprünge 17 erstrecken sich über die gesamte Länge der Stegplatte 12. Die Versteifungsrippen 20 weisen zu den Vorsprüngen passende Aussparungen 22 auf. Indem die drei Vorsprünge über die Stegplatte 12 verteilt sind, entsteht so eine Formschlussverbindung zwischen Stegplatte 10 und einer Versteifungsrippe 20. Für die Montage wird eine Versteifungsrippe 12 in Längsrichtung des Reflektortrageelements 2 auf die Vorsprünge 17 an der Stegplatte aufgeschoben. Soll eine Versteifungsrippe 17 in Längsrichtung fixiert werden, kann sie mit der Stegplatte 10 verschraubt, vernietet, verklebt oder verschweißt werden (nicht dargestellt). Die Versteifungsrippe 20 des Ausführungsbeispiels gemäß Figur 7 ist als Gussteil aus Aluminium gefertigt. Das Material der Stegplatte 10 besteht aus einem recycelten Polypropylen, welchem als Verstärkungsstoff Langglasfasern mit einer Länge von mehr als 8 mm beigegeben sind.

Ausgehend von Figur 7 sind bei erfindungsgemässen Ausführungsbeispiel gemäß Figur 8 die Stege 13 der Stegplatte 10 zum Großteil ebenfalls in einem Winkel gegenüber den dünnen Platten 12 angeordnet, wobei sich jeweils zwei Stege 13 überkreuzen. Es entsteht somit ein X-Muster zwischen den dünnen Platten 12 der Stegplatte 10, welches zu einer hohen Torsionssteifigkeit führt. Die auf der Rückseite der Stegplatte 12 in Längsrichtung verlaufenden Vorsprünge 17 haben gegenüber denjenigen aus Figur 7 für einen Formschluss mit einer Versteifungsrippe 20 besonders geeignete Formgebungen. Der eine Vorsprung 17 weist dabei Schwalbenschwanz-, der andere Vorsprung 17 eine Doppelfingerform auf, wobei in der Versteifungsrippe 20 dazu passende Aussparungen 22 vorgesehen sind. Die Montage der Versteifungsrippe 20 verläuft dabei wie in Zusammenhang mit Figur 7 beschrieben. Es ist selbstverständlich auch möglich, die einzelnen möglichen Formgebungen der Vorsprünge 17 beliebig miteinander zu kombinieren oder lediglich eine bestimmte Formgebung bei einem Reflektortrageelement 2 zu verwenden.

## Patentansprüche

1. Tragstruktur (1) für den Reflektor (4) eines Solarkollektors (3) mit einem in Längsrichtung (90) rinnenparabolisch geformten Reflektortragelement (2), wobei das Reflektortragelement (2) aus Kunststoff ist und den Aufbau einer Stegplatte (10) hat, wobei sich die Kammern (11) der Stegplatte (10) in Längsrichtung (90) des Reflektortragelements (2) erstrecken, wobei auf der konvexen Seite (16) der Stegplatte (10) wenigstens ein in Längsrichtung verlaufender Vorsprung (17) vorgesehen ist, **dadurch gekennzeichnet, dass** der Vorsprung (17) zum Eingriff in eine passende Aussparung (22) von wenigstens einer Versteifungsrippe (20) vorgesehen ist, die auf der vom Reflektor (4) abgewandten Seite des Reflektortragelementes (2) angeordnet ist, wobei durch den Eingriff eine Formschlussverbindung zwischen der Stegplatte (10) und der Versteifungsrippe (20) entsteht.

2. Tragstruktur nach Anspruch 1,
**dadurch gekennzeichnet, dass**
die Stegplatte (10) eine oder mehrere Lagen Kammern (11) aufweist.

3. Tragstruktur nach Anspruch 1 oder 2,
**dadurch gekennzeichnet, dass**
die Stege (13) wenigstens teilweise orthogonal zu den dünnen Platten (12) der Stegplatte (10) und/oder wenigstens teilweise in einem von 90° abweichenden Winkel zu den dünnen Platten (12) der Stegplatte (10) angeordnet sind.

4. Tragstruktur nach einem der vorhergehenden Ansprüche, **dadurch gekennzeichnet, dass**
die Enden der Stegplatte (10) verschlossen sind, vorzugsweise mit demselben Material aus dem die Stegplatte (10) ist.

5. Tragstruktur nach einem der vorhergehenden Ansprüche, **dadurch gekennzeichnet, dass**
sich die wenigstens eine Versteifungsrippe (20) vorzugsweise im Wesentlichen über die gesamte Höhe des Reflektortragelementes (2) erstreckt.

6. Tragstruktur nach einem der vorhergehenden Ansprüche, **dadurch gekennzeichnet, dass**
das Material der wenigstens einen Versteifungsrippe (20) einen mit dem Material der Stegplatte (10) vergleichbaren Wärmeausdehnungskoeffizienten aufweist.

7. Tragstruktur nach einem der vorhergehenden Ansprüche, **dadurch gekennzeichnet, dass**
der wenigstens eine Vorsprung (17) einstückig mit der Stegplatte (20) extrudiert ist.

8. Tragstruktur nach einem der vorhergehenden Ansprüche, **dadurch gekennzeichnet, dass**
der Längenausdehnungskoeffizient der Stegplatte (10) durch Füll- oder Verstärkungsstoffe an den Längenausdehnungskoeffizienten des Reflektors (4) und/oder einer Vorrichtung zum Nachführen des Solarkollektors (3) angepasst ist.

9. Tragstruktur nach Anspruch 8,
**dadurch gekennzeichnet, dass**
der Verstärkungsstoff Glasfasern mit einer Länge von mehr als 8 mm sind.

10. Tragstruktur nach einem der vorhergehenden Ansprüche, **dadurch gekennzeichnet, dass**
die Stegplatte (10) quer zur Längsrichtung aus mehreren Segmenten (7, 8, 9) besteht, wobei zwischen den einzelnen Segmenten (7, 8, 9) vorzugsweise eine Nut-Feder-Verbindung vorgesehen ist.

11. Tragstruktur nach einem der vorhergehenden Ansprüche, **dadurch gekennzeichnet, dass**
die Tragstruktur (1) wenigstens auf den vom Reflektor abgewandten Seiten einen UV-Schutz aufweist, wobei der UV-Schutz vorzugsweise in Form einer zusätzlichen Schicht mit der Stegplatte (10) ko-extrudiert ist.

12. Tragstruktur nach einem der vorhergehenden Ansprüche, **dadurch gekennzeichnet, dass** die Stegplatte (10) und/oder die wenigstens eine Versteifungsrippe (20) aus Polycarbonat, Acrylnitril-Butadien-Styrol-Copolymerisat, Polyethylenterephthalat , Polyoxymethylen, Polypropylen, Polyethylen, Polystyrol, Polyvinylchlorid oder Mischungen dieser Materialien sind, wobei die Materialien bevorzugt recycelt sind.

13. Solarkollektor umfassend einen Reflektor und eine Tragstruktur nach einem der Ansprüche 1 bis 12, **dadurch gekennzeichnet, dass**
der Reflektor (3) direkt auf die Tragstruktur (1) aufgebracht ist.

14. Solarkollektor umfassend einen Reflektor und eine Tragstruktur nach einem der Ansprüche 1 bis 12, **dadurch gekennzeichnet, dass**
zwischen dem Reflektor (4) und der Tragstruktur (1) eine flexible Schicht (19) vorgesehen ist.

15. Verfahren zum Herstellen einer Tragstruktur (1) für den Reflektor (4) eines Solarkollektors (3) mit einem Reflektortragelement (2) nach einem der Ansprüche 1 bis 12, wobei
das Reflektortragelement (2) den Aufbau einer Stegplatte (10) aufweist und in rinnenparabolischer Form extrudiert wird, wobei auf der konvexen Seite der Stegplatte (10) wenigstens ein in Längsrichtung verlaufender Vorsprung (17) vorgesehen wird, **dadurch gekennzeichnet, dass** der Vorsprung (17) zusammen mit der Stegplatte (10) extrudiert wird und dass eine mit einer passenden Aussparung (22) versehene Versteifungsrippe (20) auf der vom Reflektor (4) abgewandten Seite des Reflektortragelementes (2) in Längsrichtung auf den Vorsprung (17) aufgeschoben wird, wobei eine Formschlussverbindung zwischen der Stegplatte (10) und der Versteifungsrippe (20) entsteht.

16. Verfahren zum Herstellen einer Tragstruktur (1) für den Reflektor (4) eines Solarkollektors (3) mit einem Reflektortragelement (2) nach einem der Ansprüche 1 bis 12, wobei das Reflektortragelement (2) den Aufbau einer Stegplatte (10) aufweist und durch Warmumformung ausgehend von einer ebenen Stegplatte in eine rinnenparabolische Form erzeugt wird, wobei auf der konvexen Seite der Stegplatte (10) wenigstens ein in Längsrichtung verlaufender, einstückig mit der Stegplatte ausgebildeter Vorsprung (17) vorgesehen wird, **dadurch gekennzeichnet, dass** eine mit einer passenden Aussparung (22) versehene Versteifungsrippe (20) auf der vom Reflektor (4) abgewandten Seite des Reflektortragelementes (2) in Längsrichtung auf den Vorsprung (17) aufgeschoben wird, wobei eine Formschlussverbindung zwischen der Stegplatte (10) und der Versteifungsrippe (20) entsteht.

## Claims

1. Bearing structure (1) for the reflector (4) of a solar collector (3) with a reflector bearing element (2) formed in the longitudinal direction (90) as a parabolic trough, the reflector bearing element (2) being made of plastic and having the structure of a multi-wall panel (10), the chambers (11) of the multi-wall panel (10) extending in the longitudinal direction (90) of the reflector bearing element (2) and at least one projection (17) that runs in the longitudinal direction being provided on the convex side (16) of the multi-wall panel (10), **characterized in that** the projection (17) is intended for engaging in a matching clearance (22) of at least one stiffening rib (20), which is arranged on the side of the reflector bearing element (2) that is facing away from the reflector (4), a form-fitting connection between the multi-wall panel (10) and the stiffening rib (20) being produced by the engagement.

2. Bearing structure according to Claim 1, **characterized in that**
the multi-wall panel (10) has one or more layers of chambers (11).

3. Bearing structure according to Claim 1 or 2, **characterized in that**
the walls (13) are arranged at least partially orthogonally in relation to the thin sheets (12) of the multi-wall panel (10) and/or at least partially at an angle deviating from 90° in relation to the thin sheets (12) of the multi-wall panel (10).

4. Bearing structure according to one of the preceding claims,
**characterized in that**
the ends of the multi-wall panel (10) are closed, preferably with the same material from which the multi-wall panel (10) is made.

5. Bearing structure according to one of the preceding claims,
**characterized in that**
the at least one stiffening rib (20) preferably extends substantially over the entire height of the reflector bearing element (2).

6. Bearing structure according to one of the preceding claims,
**characterized in that** the material of the at least one stiffening rib (20) has a coefficient of thermal expansion comparable to the material of the multi-wall panel (10).

7. Bearing structure according to one of the preceding claims,
**characterized in that**
the at least one projection (17) is extruded in one piece with the multi-wall panel (20).

8. Bearing structure according to one of the preceding claims,
**characterized in that**
the coefficient of linear expansion of the multi-wall panel (10) is adapted by fillers or reinforcing materials to the coefficient of linear expansion of the reflector (4) and/or of a device for the tracking of the solar collector (3).

9. Bearing structure according to Claim 8, **characterized in that**
the reinforcing material comprises glass fibres of a length of more than 8 mm.

10. Bearing structure according to one of the preceding claims,
**characterized in that**
transversely to the longitudinal direction, the multi-wall panel (10) consists of a number of segments (7, 8, 9), a tongue-and-groove connection preferably being provided between the individual segments (7, 8, 9).

11. Bearing structure according to one of the preceding claims,
**characterized in that**
at least on the sides facing away from the reflector, the bearing structure (1) has UV protection, the UV protection preferably being coextruded with the multi-wall panel (10) in the form of an additional layer.

12. Bearing structure according to one of the preceding claims,
**characterized in that** the multi-wall panel (10) and/or the at least one stiffening rib (20) are made of polycarbonate, acrylonitrile-butadienestyrene copolymer, polyethylene terephthalate, polyoxymethylene, polypropylene, polyethylene, polystyrene, polyvinylchloride or mixtures of these materials, the materials preferably being recycled.

13. Solar collector comprising a reflector and a bearing structure according to one of Claims 1 to 12,
**characterized in that** the reflector (3) is mounted directly on the bearing structure (1).

14. Solar collector comprising a reflector and a bearing structure according to one of Claims 1 to 12,
**characterized in that**
a flexible layer (19) is provided between the reflector (4) and the bearing structure (1).

15. Method for producing a bearing structure (1) for the reflector (4) of a solar collector (3) with a reflector bearing element (2) according to one of Claims 1 to 12,
the reflector bearing element (2) having the structure of a multi-wall panel (10) and being extruded in the form of a parabolic trough and at least one projection (17) that runs in the longitudinal direction being provided on the convex side of the multi-wall panel (10), **characterized in that** the projection (17) is extruded together with the multi-wall panel (10) and **in that** a stiffening rib (20) provided with a matching clearance (22) is pushed onto the projection (17) in the longitudinal direction on the side of the reflector bearing element (2) that is facing away from the reflector (4), a form-fitting connection between the multi-wall panel (10) and the stiffening rib (20) being produced.

16. Method for producing a bearing structure (1) for the reflector (4) of a solar collector (3) with a reflector bearing element (2) according to one of Claims 1 to 12, the reflector bearing element (2) having the structure of a multi-wall panel (10) and being produced by hot forming a planar multi-wall panel into the form of a parabolic trough and at least one projection (17) that runs in the longitudinal direction and is formed in one piece with the multi-wall panel being provided on the convex side of the multi-wall panel (10), **characterized in that** a stiffening rib (20) provided with a matching clearance (22) is pushed onto the projection (17) in the longitudinal direction on the side of the reflector bearing element (2) that is facing away from the reflector (4), a form-fitting connection between the multi-wall panel (10) and the stiffening rib (20) being produced.

## Revendications

1. Structure de support (1), destinée au réflecteur (4) d'un capteur solaire (3), comprenant un élément de support de réflecteur (2) en forme de gouttière parabolique dans la direction longitudinale (90), l'élément de support de réflecteur (2) étant en matière synthétique et ayant la structure d'une plaque à nervures (10), les chambres (11) de la plaque à nervures (10) s'étendant dans la direction longitudinale (90) de l'élément de support de réflecteur (2), au moins une saillie (17) qui s'étend dans la direction longitudinale étant prévue sur le côté convexe (16) de la plaque à nervures (10), **caractérisée en ce que** la saillie (17) est prévue pour s'engager dans un évidement adapté (22) d'au moins une nervure de renforcement (20) qui est disposée sur le côté opposé au réflecteur (4) de l'élément de support de réflecteur (2), une liaison par complémentarité de formes entre le plaque à nervures (10) et la nervure de renforcement (20) étant réalisée par l'engagement.

2. Structure de support selon la revendication 1, **caractérisée en ce que**
la plaque à nervures (10) comporte au moins une couche de chambres (11).

3. Structure de support selon la revendication 1 ou 2, **caractérisée en ce que**
les nervures (13) sont disposées au moins en partie orthogonalement aux plaques minces (12) de la plaque à nervures (10) et/ou au moins en partie en formant un angle différent de 90° par rapport aux plaques minces (12) de la plaque à nervures (10).

4. Structure de support selon l'une des revendications précédentes, **caractérisée en ce que** les extrémités de la plaque à nervures (10) sont fermées, de préférence avec le même matériau que la plaque à nervures (10).

5. Structure de support selon l'une des revendications précédentes, **caractérisée en ce que** l'au moins une nervure de renforcement (20) s'étend de préférence sensiblement sur toute la hauteur de l'élément de support de réflecteur (2).

6. Structure de support selon l'une des revendications précédentes, **caractérisée en ce que** le matériau de l'au moins une nervure de renforcement (20) a un coefficient de dilatation thermique comparable à celui du matériau de la plaque à nervures (10).

7. Structure de support selon l'une des revendications précédentes, **caractérisée en ce que** l'au moins une saillie (17) est extrudée en venue de matière de la plaque à nervures (20).

8. Structure de support selon l'une des revendications précédentes, **caractérisée en ce que** le coefficient de dilatation linéaire de la plaque à nervures (10) est adapté par des matériaux de remplissage ou de renforcement au coefficient de dilatation linéaire du réflecteur (4) et/ou un dispositif de suivi du capteur solaire (3).

9. Structure de support selon la revendication 8, **caractérisée en ce que** le matériau de renforcement est formé par des fibres de verre d'une longueur supérieure à 8 mm.

10. Structure de support selon l'une des revendications précédentes, **caractérisée en ce que** la plaque à nervures (10) comprend, transversalement à la direction longitudinale, une pluralité de segments (7, 8, 9), une liaison à rainure et languette étant de préférence prévue entre les segments individuels (7, 8, 9).

11. Structure de support selon l'une des revendications précédentes,
**caractérisée en ce que** la structure de support (1) comporte une protection contre les UV au moins sur les côtés opposés au réflecteur, la protection contre les UV étant de préférence coextrudée avec la plaque à nervures (10) sous la forme d'une couche supplémentaire.

12. Structure de support selon l'une des revendications précédentes, **caractérisée en ce que** la plaque à nervures (10) et/ou l'au moins une nervure de renforcement (20) sont en polycarbonate, en copolymère acrylonitrile-butadiène-styrène, en téréphtalate de polyéthylène, en polyoxyméthylène, en polypropylène, en polyéthylène, en polystyrène, en polychlorure de vinyle ou des mélanges de ces matériaux, les matériaux étant de préférence recyclés.

13. Capteur solaire comprenant un réflecteur et une structure de support selon l'une des revendications 1 à 12, **caractérisé en ce que**
le réflecteur (5) est monté directement sur la structure de support (1).

14. Capteur solaire comprenant un réflecteur et une structure de support selon l'une des revendications 1 à 12,
**caractérisé en ce qu'**une couche flexible (19) est prévue entre le réflecteur (4) et la structure de support (1).

15. Procédé de fabrication d'une structure de support (1), destinée au réflecteur (4) d'un capteur solaire (3), comprenant un élément de support de réflecteur (2) selon l'une des revendications 1 à 12, l'élément de support de réflecteur (2) ayant la structure d'une plaque à nervures (10) et étant extrudé en forme d'une gouttière parabolique, au moins une saillie (17) qui s'étend dans la direction longitudinale étant prévue sur le côté convexe de la plaque à nervures (10), **caractérisé en ce que** la saillie (17) est extrudée conjointement avec la plaque à nervures (10) et **en ce qu'**une nervure de renforcement (20), pourvue d'un évidement adapté (22), est déplacée sur la saillie (17) dans la direction longitudinale sur le côté opposé au réflecteur (4) de l'élément de support de réflecteur (2), une liaison par complémentarité de formes étant réalisée entre la plaque à nervures (10) et la nervure de renforcement (20).

16. Procédé de fabrication d'une structure de support (1), destinée au réflecteur (4) d'un capteur solaire (3), comprenant un élément de support de réflecteur (2) selon l'une des revendications 1 à 12, l'élément de support de réflecteur (2) ayant la structure d'une plaque à nervures (10) et étant généré par formage à chaud d'une plaque à nervures plane pour obtenir une forme de gouttière parabolique, au moins une saillie (17) qui s'étend dans la direction longitudinale et qui est formée en venue de matière avec la plaque à nervures (10) étant prévue sur le côté convexe de cette dernière, **caractérisé en ce qu'**une nervure de renforcement (20), pourvue d'un évidement adapté (22), est déplacé sur la saillie (17) dans la direction longitudinale sur le côté opposé au réflecteur (4) de l'élément de support de réflecteur (2), une liaison par complémentarité de formes étant réalisée entre la plaque à nervures (10) et la nervure de renforcement (20).
